# EUROPÄISCHE PATENTSCHRIFT

(11) **EP 3 694 909 B1**
(45) Veröffentlichungstag und Bekanntmachung des Hinweises auf die Patenterteilung: **12.06.2024**
(21) Anmeldenummer: 18780146.9
(22) Anmeldetag: 08.10.2018
(51) Int. Cl.: C08J 5/18, B32B 27/12, B32B 27/40, B32B 5/02

(54) **ELASTISCHE MEMBRAN**
ELASTIC MEMBRANE
MEMBRANE ÉLASTIQUE

(30) Priorität: 10.10.2017 EP 17195796
(43) Veröffentlichungstag der Anmeldung: 19.08.2020
(73) Patentinhaber: BASF SE, 67056 Ludwigshafen am Rhein (DE)
(72) Erfinder: PRISSOK, Frank, 49448 Lemfoerde (DE); AHLERS, Juergen, 67056 Ludwigshafen am Rhein (DE); WEBER, Martin, 67056 Ludwigshafen am Rhein (DE); GRONWALD, Oliver, 67056 Ludwigshafen am Rhein (DE)
(74) Vertreter: BASF IP Association
(86) Internationale Anmeldenummer: PCT/EP2018/077308
(87) Internationale Veröffentlichungsnummer: WO 2019/072757

(56) Entgegenhaltungen:
- WO-A1-2017/178482
- GB-A- 1 210 691
- DATABASE WPI Week 200530 Thomson Scientific, London, GB; AN 2005-285963 XP002779369, & CN 1 554 705 A (CHINESE ACAD SCI SHANXI COAL CHEM INST) 15. Dezember 2004 (2004-12-15)

## Beschreibung

Die vorliegende Erfindung betrifft eine elastische Membran umfassend ein Elastomer mit einer Reißdehnung größer 150% gemessen nach DIN 53504; wobei das Elastomer ein thermoplastisches Elastomer (P1) umfasst, wobei das thermoplastische Elastomer (P1) ein Polyurethan-Elastomer basierend auf den folgenden Komponenten umfasst: 11 bis 79 Gewichts-% einer Mischung aus mindestens einem Diol (D1) und mindestens einem Isocyanat (11), 21 bis 89 Gewichts-% mindestens einer Verbindung (C1) aufweisend mindestens zwei gegenüber Isocyanat reaktiven Gruppen, welche ein Polyol ist, wobei die elastische Membran Poren mit einem mittleren Porendurchmesser kleiner als 2000 nm, bestimmt mittels Hg-Porosimetrie gemäß DIN 66133, aufweist. Die Erfindung betrifft weiterhin ein elastisches Gewebe umfassend ein Gewebe und mindestens eine auflaminierte elastische Membran, aufweisend eine Gesamt-Reißdehnung größer 150% gemessen nach DIN 53504, sowie die Verwendung einer elastischen Membran zur Beschichtung von Gewebe.

Wasserfeste, atmungsaktive Bekleidung und Schuhe enthalten normalerweise als funktionale Schicht expandiertes Polytetrafluorethylen (ePTFE) (US 3,953,566, US 3,962,153) oder Polyester (Sympatex) (US 5,562,977) in Form von Membranen oder dünnen Filmen. Der Einsatz von halogenhaltigen ePTFE ist bereits aus Gründen des Umweltschutzes bedenklich. Problematisch bei nicht-thermoplastischen Materialien ist weiterhin, dass meist ein Annähen der funktionalen Schicht auf das Trägermaterial erforderlich ist, wobei die Nahtstiche das Material der funktionalen Schicht wasserdurchlässig werden lassen (US 2015/0230563). Daher muss die Wasserbeständigkeit üblicherweise anschließend durch Versiegeln der Naht mit einem darüber liegenden Adhäsiv oder einem Dichtungsband hergestellt werden, wobei das Verschließen mittels Bindungs- oder Schweißprozess erfolgt. Alternativen zum Annähen sind bisher nicht bekannt bzw. Methoden wie beispielsweise eine flächige Verklebung bringen Nachteile mit sich, so verlieren die funktionalen Materialen durch eine flächige Verklebung ihre Atmungsfähigkeit und es kommt im Laufe der Zeit zu Ablösungserscheinungen etc.. Bei derzeit bekannten thermoplastischen Elastomerfolien, die auch im Bereich Bekleidung, Schuh oder Outdoor angewendet werden, ist zumeist nachteilig, dass diese Folien aufgrund ihrer hohen Wasserabsorption zwar eine relativ hohe Wasserdampfdurchlässigkeit zeigen, aber auch eine sehr hohe Quellung und sich bezüglich des Tragekomforts nicht mit porösen Membranen vergleichen lassen.

GB 1 210 691 A offenbart eine wasserdampfdurchlässige Polyurethane-Elastomer Membran zur Beschichtung eines Substrats mit einer Reißdehnung größer als 150% gemessen nach DIN 53504 (siehe insbesondere Tabelle 1 für die Messmethode), die mittels Phaseninversion aus einer Polyurethan-Elastomer-Lösung hergestellt wird. CN 1 554 705 A beschreibt eine wasserdampfdurchlässige Membran aus Polyurethan-Elastomer mit einem Reissdehnung von 100-350%, die mittels Phaseninversion aus einer Ethylenglykol enthaltenden Elastomer-Lösung hergestellt wird.

Aufgabe der vorliegenden Erfindung war daher die Bereitstellung von thermoplastischen Materialien, welche die oben genannten Nachteile nicht aufweisen, insbesondere sollte ein thermoplastisches Material bereitgestellt werden, welches neben guter Wasserdichtigkeit (LEP) und Wasserdampfdurchlässigkeit (WDD) trotzdem gute mechanische Eigenschaften aufweist. Erfindungsgemäß wurde diese Aufgabe gelöst mit einer elastischen Membran umfassend ein Elastomer mit einer Reißdehnung größer 150% gemessen nach DIN 53504; wobei das Elastomer ein thermoplastisches Elastomer (P1) umfasst, wobei das thermoplastische Elastomer (P1) ein Polyurethan-Elastomer basierend auf den folgenden Komponenten umfasst:
- 11 bis 79 Gewichts-% einer Mischung aus mindestens einem Diol (D1) und mindestens einem Isocyanat (11),
- 21 bis 89 Gewichts-% mindestens einer Verbindung (C1) aufweisend mindestens zwei gegenüber Isocyanat reaktiven Gruppen, welche ein Polyol ist,
charakterisiert dadurch, dass die elastische Membran Poren mit einem mittleren Porendurchmesser kleiner als 2000 nm, bestimmt mittels Hg-Porosimetrie gemäß DIN 66133, aufweist.

Bevorzugt weist die elastische Membran einen mittleren Porendurchmesser im Bereich von 0,001 µm bis 0,8 µm, bestimmt mittels Hg-Porosimetrie gemäß DIN 66133, und eine mittlere Dicke der Membran von kleiner als 200 µm, bevorzugt im Bereich von 5 bis 100 µm, auf.

Im Kontext der vorliegenden Erfindung wird unter einer Membran eine dünne, semipermeable Struktur verstanden, welche in der Lage ist, zwei Flüssigkeiten oder molekulare und/oder ionische Komponenten oder Partikel von einer Flüssigkeit zu trennen. Eine Membran agiert als selektive Barriere, welche einigen Partikel, Substanzen oder Chemikalien den Durchtritt erlaubt, während andere zurückgehalten werden. Beispielsweise kann eine Membran eine Umkehrosmosemembran (reverse osmosis (RO)), eine Vorwärtsosmosemembran (forward osmosis (FO)) Nanofiltrationsmembran (NF), Ultrafiltrationsmembran (UF), oder eine Mikrofiltrationsmembran (MF) sein.

Die erfindungsgemäßen elastischen Membranen weisen verbesserte mechanische Eigenschaften wie beispielsweise einen erhöhten E-Modul und eine erhöhte Reißdehnung auf. Gleichzeitig weisen sie vergleichbare Charakteristika hinsichtlich WDD und LEP wie Membranen des Standes der Technik auf. Zu den verbesserten mechanischen Eigenschaften der erfindungsgemä-ßen elastischen Membran zählt auch, dass deren Zugfestigkeit gemessen nach DIN 53504 größer als 5 MPa ist.

In einer bevorzugten Ausführungsform der elastischen Membran ist die relative Wasserdampfdurchlässigkeit (WDD_{rel.}) bei 38 °C und 90 % relativer Luftfeuchtigkeit entsprechend DIN 53122 größer als 50 [g*mm/m²*d] und die absolute Wasserdampfdurchlässigkeit (WDD_{abs}.) bei 38 °C und 90 % relativer Luftfeuchtigkeit entsprechend DIN 53122 ist größer als 1000 [g/m²*d].

Gemäß einer weiteren bevorzugten Ausführungsform der elastischen Membran ist die Wasserdichtigkeit (LEP) größer als 2 bar und liegt weiter bevorzugt im Bereich von 2 bis 5 bar, weiter bevorzugt im Bereich von 3 bis 4 bar, bestimmt nach DIN EN 20811.

Die Porengrößenverteilung innerhalb der Membran ist vorzugsweise nicht homogen, die Membran umfasst bevorzugt Poren mit verschiedenen Porengrößen. Vorzugsweise weist die Porengrößenverteilung einen Gradienten über den Durchmesser der Membran auf, wobei ein Gradient im Kontext der Erfindung so verstanden wird, dass Poren auf einer ersten Oberfläche der Membran oder nahe an dieser Oberfläche einen mittleren Porendurchmesser aufweisen, welche abweichend von mittleren Porendurchmesser einer zweiten Oberfläche oder nahe an dieser zweiten Oberfläche ist. Im Kontext der vorliegenden Erfindung ist es beispielsweise möglich, dass die Poren an oder nahe zur ersten Oberfläche einen mittleren Porendurchmesser im Bereich von 0,001 µm bis 0,01 µm aufweisen, bestimmt mittels Hg-Porosimetrie gemäß DIN 66133, und dass die Poren an oder nahe zur zweiten Oberfläche einen mittleren Porendurchmesser im Bereich von 0,1 µm bis 0,8 µm, stimmt mittels Hg-Porosimetrie gemäß DIN 66133, aufweisen. Der Grad des Gradienten des Porendurchmessers innerhalb der Membran kann in weiten Bereichen variieren. Das Verhältnis des Porendurchmessers von Poren an oder nahe zur ersten Oberfläche der Membran zu dem der Poren an oder nahe zur zweiten Oberfläche kann beispielsweise im Bereich von 1:5 bis 1:10000, bevorzugt im Bereich von 1:10 bis 1:1000, weiter bevorzugt im Bereich von 1:100 bis 1:500 liegen. Gemäß einer bevorzugten Ausführungsform weist die Porengrößenverteilung der elastischen Membran einen Gradienten über den Durchmesser der Membran auf.

Das Elastomer der elastomeren Membran umfasst ein thermoplastisches Elastomer (P1).

Das thermoplastische Elastomer (P1) wiederum umfasst ein Polyurethan-Elastomer basierend auf den folgenden Komponenten:
- 11 bis 79 Gewichts-% einer Mischung aus mindestens einem Diol (D1) und mindestens einem Isocyanat (11),
- 21 bis 89 Gewichts-% mindestens einer Verbindung (C1) aufweisend mindestens zwei gegenüber Isocyanat reaktiven Gruppen, welche ein Polyol ist.

Gemäß einer bevorzugten Ausführungsform ist das thermoplastische Elastomer (P1) ein Polyurethan-Elastomer basierend auf den folgenden Komponenten:
- 15 bis 75 Gewichts-% einer Mischung aus mindestens einem Diol (D1) und mindestens einem Isocyanat (11),
- 25 bis 85 Gewichts-% mindestens einer Verbindung (C1) aufweisend mindestens zwei gegenüber Isocyanat reaktiven Gruppen, welche ein Polyol ist.

Weiter bevorzugt ist das thermoplastische Elastomer (P1) ein Polyurethan-Elastomer basierend auf den folgenden Komponenten:
- 20 bis 75 Gewichts-% einer Mischung aus mindestens einem Diol (D1) und mindestens einem Isocyanat (11),
- 25 bis 80 Gewichts-% mindestens einer Verbindung (C1) aufweisend mindestens zwei gegenüber Isocyanat reaktiven Gruppen, welche ein Polyol ist.

Weiter bevorzugt ist das thermoplastische Elastomer (P1) ein Polyurethan-Elastomer basierend auf den folgenden Komponenten:
- 55 bis 70 Gewichts-% einer Mischung aus mindestens einem Diol (D1) und mindestens einem Isocyanat (11),
- 30 bis 45 Gewichts-% mindestens einer Verbindung (C1) aufweisend mindestens zwei gegenüber Isocyanat reaktiven Gruppen, welche ein Polyol ist.

Das molare Verhältnis des mindestens einen Diols (D1) und des mindestens einen Polyisocyanats (11) liegt üblicherweise im Bereich von 95:100 bis 100:95. Bevorzugt liegt das molare Verhältnis des mindestens einen Diols (D1) und des mindestens einen Polyisocyanats (11) im Bereich von 98:100 bis 100:98, weiter bevorzugt im Bereich von 99:100 bis 100:99.

Die mindestens eine Verbindung (C1) ist ein Polyol. Hier sind alle geeigneten Polyole einsetzbar, beispielsweise Polyetherdiole oder Polyesterdiole, oder Mischungen von zwei oder mehr davon. Geeignete Polyetherpolyole oder -diole sind beispielsweise Polyetherdiole basierend auf Ethylenoxid oder Propylenoxid oder deren Mischungen, beispielsweise Copolymere wie Blockcopolymere. Weiterhin kann jedes geeignete Polyesterdiol eingesetzt werden, wobei Polyesterdiol hier auch Polycarbonatdiole umfasst.

Gemäß einer bevorzugten Ausführungsform der elastischen Membran ist die mindestens eine Verbindung (C1) Polytetrahydrofuran (pTHF).

Das mindestens eine Isocyanat (11) ist bevorzugt mindestens ein Polyisocyanat (11). Als Polyisocyanat (i1) können aliphatische, cycloaliphatische, araliphatische und/oder aromatische Diisocyanate eingesetzt werden. Beispielhaft zu nennen sind die folgenden aromatischen Isocyanate: 2,4-Toluol-diisocyanat, Mischungen aus 2,4- und 2,6-Toluoldiisocyanat, 4,4'-, 2,4 '- und/oder 2,2'-Diphenylmethandiisocyanat (MDI), Mischungen aus 2,4'- und 4,4'-Diphenylmethandiisocyanat, urethan-modifiziertes flüssiges 4,4'- und/oder 2,4-Diphenylmethandiisocyanat, 4,4'-Diisocyanatodiphenylethan, Mischungen aus monomeren Methandiphenyldiisocyanaten und weiteren hoch polycyclischen Homologen von Methandiphenyldiisocyanat (polymeres MDI), 1,2- und 1,5-Naphthylendiisocyanat.

Aliphatische Diisocyanate sind übliche aliphatische und/oder cycloaliphatische Diisocyanate, beispielsweise tri-, tetra-, penta-, hexa-, hepta- und/oder Octamethylendiisocyanat, 2-Methylpentamethylen-1,5-diisocyanat, 2-Ethylbutylen-1,4-diisocyanat, 1-Isocyanato-3,3,5-trimethyl-5-isocyanatomethylcyclohexan (Isophorondiisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat, 4,4'-, 2,4'- und/oder 2,2 '-Dicyclohexylmethandiisocyanat (H12MDI).

Das mindestens eine Polyisocyanat (11) ist vorzugsweise ausgewählt aus der Gruppe bestehend aus Diphenylmethandiisocyanat (MDI), Toluoldiisocyanat (TDI), Hexamethylendiisocyanat (HDI) und Dicyclohexylmethan-4,4'-diisocyanat (H12MDI), weiter bevorzugt MDI.

Das Polyisocyanat kann rein oder in Form einer Zusammensetzung, beispielsweise als Isocyanatprepolymer eingesetzt werden. Weiterhin kann eine Mischung umfassend Polyisocyanat und mindestens ein Lösungsmittel, eingesetzt werden, wobei geeignete Lösungsmittel dem Fachmann bekannt sind.

Polyisocyanatprepolymere sind erhältlich mittels Reaktion der oben beschriebenen Polyisocyanate im Überschuss, beispielsweise bei Temperaturen im Bereich von 30 bis 100°C, bevorzugt bei mehr als 80°C, mit Polyolen unter Erhalt des Prepolymers. Für die Herstellung des Prepolymers werden bevorzugt Polyisocyanate und kommerziell erhältliche Polyole basierend auf Polyestern eingesetzt, ausgehend beispielsweise von Adipinsäure, oder auf Polyethern, ausgehend beispielsweise von Tetrahydrofuran, Ethylenoxid und/oder Propylenoxid.

Polyole sind dem Fachmann bekannt und beispielsweise beschrieben in "Kunststoffhandbuch, 7, Polyurethane", Carl Hanser Verlag, 3. Auflage 1993, Sektion 3.1. Polyole welche bevorzugt eingesetzt werden sind polymere Verbindungen die Wasserstoffatome aufweisen, welche reaktiv gegenüber Isocyanaten sind. Besonders bevorzugte Polyole sind Polyetherole.

In der Herstellung der Polyisocyanatprepolymere können übliche Kettenverlängerer oder Vernetzungsmittel optional den Polyolen zugesetzt werden. Bevorzugte Kettenverlängerer sind 1,4-Butandiol, Dipropylenglykol und/oder Tripropylenglykol. In diesem Fall ist das Verhältnis der organischen Polyisocyanate zu Polyolen und Kettenverlängerer vorzugsweise so gewählt, dass das Isocyanatprepolymer einen NCO-Gehalt im Bereich von 2% bis 30%, weiter bevorzugt im Bereich von 6% bis 28%, weiter bevorzugt im Bereich von 10% bis 24%, aufweist.

Als Diol (D1) kann generell jedwedes Diol eingesetzt werden. Diol (D1) ist bevorzugt ausgewählt aus der Gruppe bestehend aus aliphatischen, araliphatischen, aromatischen, und/oder cycloaliphatischen Verbindungen mit einem Molgewicht im Bereich von 0,05 kg/mol bis 0,499 kg/mol, bevorzugt difunktionale Verbindungen, beispielsweise Diamine und/oder Alkandiole mit 2 bis 10 Kohlenstoffatomen im Alkylenteil, di-, tri-, tetra-, penta-, hexa-, hepta-, octa-, nona-, und/oder Decaalkylenglykole aufweisend von 3 bis 8 Kohlenstoffatome, insbesondere Ethylen-1,2-glykol, 1,3-Propandiol, 1,4-Butandiol, 1,6-Hexandiol, und bevorzugt korrespondierende oligo- und/oder Polypropylenglykole wie Diethylenglykol, Dipropylenglykol, 1,4-Cyclohexandiol, 1,4-Dimethanolcyclohexan, und Neopentylglykol, und es ist also möglich Mischungen zu verwenden. Bevorzugt weisen die Diole nur primäre Hydroxygruppen auf, wobei besonders bevorzugt Ethandiol, Butandiol und Hexandiol sind. Diol (D1) ist daher bevorzugt ausgewählt aus der Gruppe bestehend aus Ethandiol, Butandiol und Hexandiol und umfasst besonders bevorzugt mindestens 1,4-Butandiol.

In der Herstellung des thermoplastischen Elastomers (P1) können weitere Verbindungen wie beispielsweise Katalysatoren, und/oder übliche Hilfsstoffe und/oder Additive eingesetzt werden.

Übliche Hilfsstoffe sind beispielsweise oberflächenaktive Substanzen, Füllstoffe, Flammhemmer, Nukleirungsmittel, Oxidationsstabilisatoren, Schmiermittel und Mold-release-Hilfen, Farbstoffe, Pigmente und optional Stabilisatoren, z.B. zum Schutz gegen Hydrolyse, Licht, Hitze oder Entfärbung, anorganische und/oder organische Füllstoffe, Verstärkungsmittel und Weichmacher. Übliche Hilfsstoffe und Additive können beispielhaft dem "Kunststoffhandbuch" entnommen werden ("Kunststoffhandbuch"; 7, "Polyurethane", Carl Hanser Verlag, 1966, Seiten 103-113).

Erfindungsgemäß wurde gefunden, dass wenn mindestens ein thermoplastisches Elastomer (P1), insbesondere ein Polyurethan-Elastomer, wie oben beschrieben eingesetzt wird, stabile Filme oder Membranen aus einer geeigneten Lösung des thermoplastischen Elastomers (P1), insbesondere des Polyurethan-Elastomers mittels Phaseninversion erzeugt werden können.

Ein Verfahren zur Herstellung einer elastischen Membran umfassend ein Elastomer mit einer Reißdehnung größer 150% gemessen nach DIN 53504, welches allerdings nicht von der vorliegenden Erfindung umfasst ist, umfasst die Schritte:
(i) Bereitstellen einer Lösung (L1) umfassend zumindest ein thermoplastisches Elastomer (P1);
(ii) Erzeugen einer Membran aus der Lösung (L1) mittels Phaseninversion.

Gemäß (i) wird eine Lösung (L1) umfassend zumindest ein thermoplastisches Elastomer (P1) bereitgestellt. Die Lösung (L1) umfasst das thermoplastische Elastomer (P1), insbesondere ein Polyurethan-Elastomer wie oben beschrieben, und mindestens ein geeignetes Lösungsmittel oder eine Lösungsmittelmischung. Geeignete Lösungsmittel sind beispielsweise ausgewählt aus der Gruppe bestehend aus organischen, insbesondere aprotischen polaren organischen Lösungsmitteln. Geeignete Lösungsmittel weisen einen Siedepunkt im Bereich von 80 bis 320° C, bevorzugt im Bereich von 100 bis 280°C, weiter bevorzugt im Bereich von 150 bis 250°C, auf. Geeignete aprotische polare organische Lösungsmittel sind beispielsweise hochsiedende Ether, Ester, Ketone, asymmetrisch halogenierte Kohlenwasserstoffe, Anisol, N,N-Dimethylformamid, N,N-Dimethylacetamid, Dimethylsulfoxid, Sulfolan, N,N-Dimethyl-2-hydroxypropansäureamid, N,N-Diethyl-2-hydroxypropansäureamid, N,N-Dimethyl-2-methoxypropansäureamid, N,N-Diethyl-2-methoxypropansäureamid, N-Formylpyrrolidin, N-Acetylpyrrolidin, N-Formylpiperidin, N-Acetylpiperidin, N-Formylmorpholin, N-Acetylmorpholin, N-Methyl-2-pyrrolidon und/oder N-Ethyl-2-pyrrolidon. Mischungen aus zwei oder mehr dieser Lösungsmittel können ebenfalls eingesetzt werden.

Besonders bevorzugt ist N-Methylpyrrolidon als Lösungsmittel für die Lösung (L1). Die Lösung (L1) kann thermoplastische Elastomer (P1), insbesondere das Polyurethan-Elastomer in einer Menge ausreichend für die Ausbildung eines Films aus der Lösung aufweisen. Beispielsweise kann die Lösung (L1) 10 bis 35 Gewichts-% des thermoplastischen Elastomers (P1), insbesondere des Polyurethan-Elastomers, bevorzugt 15 bis 25 Gewichts-%, aufweisen.

Die Lösung (L1) kann bei erhöhten Temperaturen hergestellt werden.

Die Lösung (L1) umfasst mindestens thermoplastisches Elastomer (P1), insbesondere ein Polyurethan-Elastomer, kann aber weitere Verbindungen oder Additive umfassen. Möglich, aber nicht von der vorliegenden Erfindung umfasst, ist es, dass die Lösung (L1) mindestens ein Additiv umfasst, ausgewählt aus der Gruppe bestehend aus mono-, di- und Trialkanolen, welche keine weiteren funktionalen Gruppen aufweisen, bevorzugt aus der Gruppe bestehend aus isoPropanol, Ethylenglykol, Propylenglykol und Propylentriol (Glycerin), bevorzugt Glycerin.

Gemäß (ii) wird aus der Lösung (L1) eine Membran mittels Phaseninversion erzeugt. Geeignete Verfahren sind dem Fachmann an sich bekannt. Bevorzugt wird eine nicht-lösungsmittel induzierte Phaseninversion durchgeführt. Der Schritt (ii) kann daher beispielhaft die Schritte (ii-a) und (ii-b) umfassen.

In einer Variante des Verfahrens umfasst (ii) (ii-a) und (ii-b):
(ii-a) Ausbilden eines Films aus der Lösung (L1);
(ii-b) Kontaktieren des Films gemäß (ii-a) mit einer Mischung (L2).

Gemäß Schritt p (ii-a) wird aus der Lösung (L1) ein Film ausgebildet, wobei dem Fachmann bekannte Verfahren angewandt werden. Der Film wird anschließend gemäß (ii-b) mit einer Mischung (L2) in Kontakt gebracht. Der Schritt (ii) verursacht Koagulation, wobei Membranen erhalten werden. Die Mischung (L2) kann jedwede Verbindung enthalten, welche geeignet ist, Koagulation zu verursachen (Koagulanz). Die Mischung (L2) weist insbesondere eine geringere Löslichkeit für das thermoplastische Elastomer (P1), insbesondere für das Polyurethan-Elastomer, auf. Als das Lösungsmittel, dass für die Herstellung von (L1) eingesetzt wurde. Bevorzugt werden nicht-Lösemittel wie beispielsweise Wasser oder Wasser enthaltende Mischungen für (L2) eingesetzt. Geeignete Koagulantien umfassen daher flüssiges Wasser, Wasserdampf, Alkohole oder Mischungen von zwei oder mehr davon. Vorzugsweise umfasst (L2) ein Koagulanz ausgewählt aus der Gruppe von flüssigem Wasser, Wasserdampf, Alkoholen oder Mischungen hiervon. Alkohole, welche als Koagulantien bevorzugt sind, sind Mono-, Di-, oder Trialkanole, welche keine weiteren funktionellen Gruppen aufweisen, beispielsweise isoPropanol, Ethylenglykol oder Propylenglycol. Vorzugsweise umfasst die Mischung (L2) flüssiges Wasser.

Schritt (ii), insbesondere die Schritte (ii-a) und/oder (ii-b). kann/können bei erhöhten Temperaturen erfolgen.

Das Verfahren zur Herstellung einer elastischen Membran umfasst bevorzugt
(i) Bereitstellen einer Lösung (L1) umfassend zumindest ein thermoplastisches Elastomer (P1);
(ii) Erzeugen einer Membran aus der Lösung (L1) mittels Phaseninversion, umfassend
   (ii-a) Ausbilden eines Films aus der Lösung (L1);
   (ii-b) Kontaktieren des Films gemäß (ii-a) mit einer Mischung (L2).

Das Verfahren kann weitere Schritte umfassen, beispielsweise Waschschritte oder eine Temperaturbehandlung.

Die erhaltene elastische Membran weist Poren mit einem mittleren Porendurchmesser kleiner als 2000 nm, bestimmt mit Hg-Porosimetrie nach DIN 66133, auf.

Der mittlere Porendurchmesser der erhaltenen elastischen Membran ist im Bereich von 0,001 µm bis 0,8 µm, bestimmt mittels Hg-Porosimetrie gemäß DIN 66133, und die mittlere Dicke der Membrane kleiner 200 µm, bevorzugt im Bereich von 5 bis 100 µm.

Die Zugfestigkeit der erhaltenen elastischen Membran gemessen nach DIN 53504 ist größer als 5 MPa.

Die relative Wasserdampfdurchlässigkeit (WDD_{rel.}) der erhaltenen elastischen Membran bei 38 ° C und 90 % relativer Luftfeuchtigkeit entsprechend DIN 53122 ist größer als 50 [g*mm/m²*d] und die absolute Wasserdampfdurchlässigkeit (WDD_{abs}.) bei 38 °C und 90 % relativer Luftfeuchtigkeit entsprechend DIN 53122 ist größer als 1000 [g/m²*d].

Die Wasserdichtigkeit (LEP) der erhaltenen elastischen Membran beträgt größer als 2 bar und liegt bevorzugt im Bereich von 2 bis 5 bar, weiter bevorzugt im Bereich von 3 bis 4 bar, bestimmt nach DIN EN 20811.

Die Porengrößenverteilung weist einen Gradienten über den Durchmesser der elastischen Membran auf.

Das thermoplastische Elastomer (P1) ist ausgewählt aus der Gruppe bestehend aus Polyurethan-, Polyester-, Polyetherester-, Polyesterester-, Polyamid-, Polyetheramid-, Polystyrol- und Ethylenvinylacetat-Elastomer, bevorzugt Polyurethan-Elastomer.

Das thermoplastische Elastomer (P1) umfasst ein Polyurethan-Elastomer basierend auf den folgenden Komponenten:
- 11 bis 79 Gewichts-% einer Mischung aus mindestens einem Diol (D1) und mindestens einem Isocyanat (11),
- 21 bis 89 Gewichts-% mindestens einer Verbindung (C1) aufweisend mindestens zwei gegenüber Isocyanat reaktiven Gruppen.

Das thermoplastische Elastomer (P1) umfasst bevorzugt ein Polyurethan-Elastomer basierend auf den folgenden Komponenten:
- 15 bis 75 Gewichts-% einer Mischung aus mindestens einem Diol (D1) und mindestens einem Isocyanat (11),
- 25 bis 85 Gewichts-% mindestens einer Verbindung (C1) aufweisend mindestens zwei gegenüber Isocyanat reaktiven Gruppen.

Das thermoplastische Elastomer (P1) ein Polyurethan-Elastomer umfasst weiter bevorzugt basierend auf den folgenden Komponenten:
- 20 bis 75 Gewichts-% einer Mischung aus mindestens einem Diol (D1) und mindestens einem Isocyanat (11),
- 25 bis 80 Gewichts-% mindestens einer Verbindung (C1) aufweisend mindestens zwei gegenüber Isocyanat reaktiven Gruppen.

Das thermoplastische Elastomer (P1) umfasst weiter bevorzugt ein Polyurethan-Elastomer basierend auf den folgenden Komponenten:
- 55 bis 70 Gewichts-% einer Mischung aus mindestens einem Diol (D1) und mindestens einem Isocyanat (11),
- 30 bis 45 Gewichts-% mindestens einer Verbindung (C1) aufweisend mindestens zwei gegenüber Isocyanat reaktiven Gruppen.

Die mindestens eine Verbindung (C1) kann jedwede Verbindung mit mindestens zwei gegenüber Isocyanat reaktiven Gruppen sein. Bevorzugt sind die gegenüber Isocyanat reaktiven Gruppen Hydroxy- oder Amino-Gruppen. Die mindestens eine Verbindung (C1) kann zur Modifikation der Eigenschaften des thermoplastischen Elastomers (P1) zugesetzt werden. Jedwede Verbindung kann verwendet werden, solange sie geeignet ist, ein thermoplastisches Elastomer (P1), insbesondere ein Polyurethan-Elastomer, mit der Mischung aus dem mindestens einen Diol (D1) und dem mindestens einen Polyisocyanat (11) zu ergeben. Beispielsweise kann die mindestens eine Verbindung (C1) ein Polyol sein, aber auch ein Polymer mit mindestens zwei Hydroxygruppen oder mindestens zwei Aminogruppen anders als ein Polyol, beispielsweise ein hydrophobes Polymer oder Oligomer umfassend Silizium.

Bevorzugt ist die mindestens eine Verbindung (C1) ein Polyol. Hier sind alle geeigneten Polyole einsetzbar, beispielsweise Polyetherdiole oder Polyesterdiole, oder Mischungen von zwei oder mehr davon. Geeignete Polyetherpolyole oder -diole sind beispielsweise Polyetherdiole basierend auf Ethylenoxid oder Propylenoxid oder deren Mischungen, beispielsweise Copolymere wie Blockcopolymere. Weiterhin kann jedes geeignete Polyesterdiol eingesetzt werden, wobei Polyesterdiol hier auch Polycarbonatdiole umfasst.

Bevorzugt ist die mindestens eine Verbindung (C1) aufweisend mindestens zwei gegenüber Isocyanat reaktiven Gruppen ein Polyol, weiter bevorzugt pTHF.

Das mindestens eine Isocyanat (11) ist bevorzugt mindestens ein Polyisocyanat (11). Als Polyisocyanat (i1) können aliphatische, cycloaliphatische, araliphatische und/oder aromatische Diisocyanate eingesetzt werden. Beispielhaft zu nennen sind die folgenden aromatischen Isocyanate: 2,4-Toluol-diisocyanat, Mischungen aus 2,4- und 2,6-Toluoldiisocyanat, 4,4'-, 2,4 '- und/oder 2,2'-Diphenylmethandiisocyanat (MDI), Mischungen aus 2,4'- und 4,4'-Diphenylmethandiisocyanat, urethan-modifiziertes flüssiges 4,4'- und/oder 2,4-Diphenylmethandiisocyanat, 4,4'-Diisocyanatodiphenylethan, Mischungen aus monomeren Methandiphenyldiisocyanaten und weiteren hoch polycyclischen Homologen von Methandiphenyldiisocyanat (polymeres MDI), 1,2- und 1,5-Naphthylendiisocyanat.

Aliphatische Diisocyanate sind übliche aliphatische und/oder cycloaliphatische Diisocyanate, beispielsweise tri-, tetra-, penta-, hexa-, hepta- und/oder Octamethylendiisocyanat, 2-Methylpentamethylen-1,5-diisocyanat, 2-Ethylbutylen-1,4-diisocyanat, 1-Isocyanato-3,3,5-trimethyl-5-isocyanatomethylcyclohexan (Isophorondiisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat, 4,4'-, 2,4'- und/oder 2,2'-Dicyclohexylmethandiisocyanat.

Das mindestens eine Polyisocyanat (11) ist vorzugsweise ausgewählt aus der Gruppe bestehend aus Diphenylmethandiisocyanat (MDI), Toluoldiisocyanat (TDI), Hexamethylendiisocyanat (HDI) und Dicyclohexylmethan-4,4'-diisocyanat (H12MDI), weiter bevorzugt MDI. Das Polyisocyanat kann rein oder in Form einer Zusammensetzung, beispielsweise als Isocyanatprepolymer eingesetzt werden. Weiterhin kann eine Mischung umfassend Polyisocyanat und mindestens ein Lösungsmittel, eingesetzt werden, wobei geeignete Lösungsmittel dem Fachmann bekannt sind.

Polyisocyanatprepolymere sind erhältlich mittels Reaktion der oben beschriebenen Polyisocyanate im Überschuss, beispielsweise bei Temperaturen im Bereich von 30 bis 100°C, bevorzugt bei mehr als 80°C, mit Polyolen unter Erhalt des Prepolymers. Für die Herstellung des Prepolymers werden bevorzugt Polyisocyanate und kommerziell erhältliche Polyole basierend auf Polyestern eingesetzt, ausgehend beispielsweise von Adipinsäure, oder auf Polyethern, ausgehend beispielsweise von Tetrahydrofuran, Ethylenoxid und/oder Propylenoxid.

Polyole sind dem Fachmann bekannt und beispielsweise beschrieben in "Kunststoffhandbuch, 7, Polyurethane", Carl Hanser Verlag, 3. Auflage 1993, Sektion 3.1. Polyole welche bevorzugt eingesetzt werden sind polymere Verbindungen die Wasserstoffatome aufweisen, welche reaktiv gegenüber Isocyanaten sind. Besonders bevorzugte Polyole sind Polyetherole.

In der Herstellung der Polyisocyanatprepolymere können übliche Kettenverlängerer oder Vernetzungsmittel optional den Polyolen zugesetzt werden. Bevorzugte Kettenverlängerer sind 1,4-Butandiol, Dipropylenglykol und/oder Tripropylenglykol. In diesem Fall ist das Verhältnis der organischen Polyisocyanate zu Polyolen und Kettenverlängerer vorzugsweise so gewählt, dass das Isocyanatprepolymer einen NCO-Gehalt im Bereich von 2% bis 30%, weiter bevorzugt im Bereich von 6% bis 28%, weiter bevorzugt im Bereich von 10% bis 24%, aufweist.

Als das mindestens eine Diol (D1) kann generell jedwedes Diol eingesetzt werden. Diol (D1) ist bevorzugt ausgewählt aus der Gruppe bestehend aus aliphatischen, araliphatischen, aromatischen, und/oder cycloaliphatischen Verbindungen mit einem Molgewicht im Bereich von 0,05 kg/mol bis 0,499 kg/mol, bevorzugt difunktionale Verbindungen, beispielsweise Diamine und/oder Alkandiole mit 2 bis 10 Kohlenstoffatomen im Alkylenteil, di-, tri-, tetra-, penta-, hexa-, hepta-, octa-, nona-, und/oder Decaalkylenglykole aufweisend von 3 bis 8 Kohlenstoffatome, insbesondere Ethylen-1,2-glykol, 1,3-Propandiol, 1,4-Butandiol, 1,6-Hexandiol, und bevorzugt korrespondierende oligo- und/oder Polypropylenglykole wie Diethylenglykol, Dipropylenglykol, 1,4-Cyclohexandiol, 1,4-Dimethanolcyclohexan, und Neopentylglykol, und es ist also möglich Mischungen zu verwenden. Bevorzugt weisen die Diole nur primäre Hydroxygruppen auf, wobei besonders bevorzugt Ethandiol, Butandiol und Hexandiol sind. Das mindestens eine Diol (D1) ist daher bevorzugt ausgewählt aus der Gruppe bestehend aus Ethandiol, Butandiol und Hexandiol und umfasst besonders bevorzugt mindestens 1,4-Butandiol.

In der Herstellung des thermoplastischen Elastomers (P1) können weitere Verbindungen wie beispielsweise Katalysatoren, und/oder übliche Hilfsstoffe und/oder Additive eingesetzt werden.

Übliche Hilfsstoffe sind beispielsweise oberflächenaktive Substanzen, Füllstoffe, Flammhemmer, Nukleirungsmittel, Oxidationsstabilisatoren, Schmiermittel und Mold-release-Hilfen, Farbstoffe, Pigmente und optional Stabilisatoren, z.B. zum Schutz gegen Hydrolyse, Licht, Hitze oder Entfärbung, anorganische und/oder organische Füllstoffe, Verstärkungsmittel und Weichmacher. Übliche Hilfsstoffe und Additive können beispielhaft dem "Kunststoffhandbuch" entnommen werden, Volumen 7, herausgegeben von Vieweg und Höchtlen, Carl Hanser Verlag, München 1966 (Seiten 103-113).

Die elastische Membran umfassend ein Elastomer erhalten oder erhältlich nach dem Verfahren weist eine Reißdehnung größer 150% gemessen nach DIN 53504 auf. Die Membran erhalten oder erhältlich nach dem Verfahren hat vorteilhafte Eigenschaften wie eine hohe Wasserdichtigkeit a (LEP, gemessen nach DIN EN 20811) und gute Wasserdampfdurchlässigkeitswerte (WDD, gemessen nach DIN 53122) auf. So beträgt die Wasserdichtigkeit (LEP) der nach dem Verfahren erhaltenen oder erhältlichen elastische Membran mehr als 2 bar und liegt bevorzugt im Bereich von 2 bis 5 bar, weiter bevorzugt im Bereich von 3 bis 4 bar, bestimmt nach DIN EN 20811. Die relative Wasserdampfdurchlässigkeit (WDD_{rel.}) bei 38 °C und 90 % relativer Luftfeuchtigkeit entsprechend DIN 53122 der nach dem Verfahren erhaltenen oder erhältlichen elastische Membran ist größer als 50 [g*mm/m²*d] und die absolute Wasserdampfdurchlässigkeit (WDD_{abs}.) bei 38 °C und 90 % relativer Luftfeuchtigkeit ist entsprechend DIN 53122 größer als 1000 [g/m²*d]. Dementsprechend ist die nach dem Verfahren erhaltene oder erhältliche elastische Membran gut geeignet für Anwendungen, welche eine hohe Wasserdampfdurchlässigkeit erfordern, beispielsweise in Funktionsbekleidung.

Wie oben bereits dargelegt weist die elastische Membran, erhalten oder erhältlich nach dem Verfahren, Poren mit einem mittleren Porendurchmesser kleiner als 2000 nm, bestimmt mit Hg-Porosimetrie nach DIN 66133, auf. Der mittlere Porendurchmesser liegt bevorzugt im Bereich von 0,001 µm bis 0,8 µm, bestimmt mittels Hg-Porosimetrie gemäß DIN 66133, und die mittlere Dicke der Membrane ist kleiner 200 µm, bevorzugt im Bereich von 5 bis 100 µm. Die Zugfestigkeit gemessen nach DIN 53504 ist größer als 5 MPa.

Wie oben bereits dargelegt weist die elastische Membran, erhalten oder erhältlich nach dem Verfahren, bezüglich der Porengrößenverteilung einen Gradienten über den Durchmesser der elastischen Membran auf.

Die vorliegende Erfindung betrifft in einem weiteren Aspekt ein elastisches Gewebe umfassend ein Gewebe und mindestens eine auflaminierte elastische Membran wie eingangs beschrieben, wobei das elastische Gewebe eine Gesamt-Reißdehnung größer 150%, gemessen nach DIN 53504, aufweist.

In einem weiteren Aspekt betrifft die vorliegende Erfindung weiterhin die Verwendung einer elastischen Membran wie eingangs beschrieben zur Beschichtung von Gewebe, bevorzugt zur Herstellung eines Artikels ausgewählt aus der Gruppe bestehend aus Bekleidung, Schuh, Stiefel, Schutzanzug, Zelt, Plane, Rucksack und Schirm.

Im Rahmen der Bekleidung ist insbesondere Funktionalbekleidung bevorzugt, so wird die elastische Membran bevorzugt für die Herstellung von Outdoorbekleidung, Sportbekleidung, beispielsweise Segel-, Kletter- oder Skibekleidung, Regenbekleidung, wobei Bekleidung Hosen, Jacken, Handschuhe, Hüte und Mützen umfasst. Im Rahmen von Schuh und Stiefel sind ebenfalls Schuhe und Stiefel für den Funktionalbereich bevorzugt, d.h. Outdoorschuhe/-stiefel, Sportschuhe/-stiefel, beispielsweise Segel-, Kletter- oder Skischuhe/-stiefel, oder Regenschuhe/-stiefel.

Die vorliegende Erfindung wird weiter illustriert durch die folgenden Ausführungsformen und Kombinationen von Ausführungsformen wie angezeigt durch die entsprechenden Bezüge und Rückbezüge. Insbesondere ist zu betonen, dass jede Instanz, wo ein Bereich von Ausführungsformen angegeben ist, beispielsweise im Kontext eines Ausdrucks wie "Das Verfahren nach einer der Ausführungsformen 1 bis 4", jede Ausführungsform im Bereich als explizit für den Fachmann offenbart gemeint ist, d.h. die Bedeutung dieses Ausdrucks ist vom Fachmann als synonym zu "Das Verfahren nach einer der Ausführungsformen 1, 2, 3 und 4" zu verstehen.

Eine Ausführungsform (1) betrifft eine elastische Membran umfassend ein Elastomer mit einer Reißdehnung größer 150% gemessen nach DIN 53504; wobei das Elastomer ein thermoplastisches Elastomer (P1) umfasst, wobei das thermoplastische Elastomer (P1) ein Polyurethan-Elastomer basierend auf den folgenden Komponenten umfasst:
- 11 bis 79 Gewichts-% einer Mischung aus mindestens einem Diol (D1) und mindestens einem Isocyanat (11),
- 21 bis 89 Gewichts-% mindestens einer Verbindung (C1) aufweisend mindestens zwei gegenüber Isocyanat reaktiven Gruppen, welche ein Polyol ist,
charakterisiert dadurch, dass die elastische Membran Poren mit einem mittleren Porendurchmesser kleiner als 2000 nm, bestimmt mittels Hg-Porosimetrie gemäß DIN 66133, aufweist.

Eine bevorzugte Ausführungsform (2), welche Ausführungsform (1) konkretisiert, betrifft die elastische Membran, wobei der mittlere Porendurchmesser im Bereich von 0,001 µm bis 0,8 µm, bestimmt mittels Hg-Porosimetrie gemäß DIN 66133, und die mittlere Dicke der Membrane kleiner 200 µm, bevorzugt im Bereich von 5 bis 100 µm, ist.

Eine bevorzugte Ausführungsform (3), welche Ausführungsform (1) oder (2) konkretisiert, betrifft die lastische Membran, wobei die Zugfestigkeit gemessen nach DIN 53504 größer als 5 MPa ist.

Eine bevorzugte Ausführungsform (4), welche eine der Ausführungsformen (1) bis (3) konkretisiert, betrifft die elastische Membran, wobei die relative Wasserdampfdurchlässigkeit (WDD_{rel.}) bei 38 °C und 90 % relativer Luftfeuchtigkeit entsprechend DIN 53122 größer als 50 [g*mm/m²*d] und die absolute Wasserdampfdurchlässigkeit (WDD_{abs}.) bei 38 °C und 90 % relativer Luftfeuchtigkeit entsprechend DIN 53122 größer als 1000 [g/m²*d] beträgt.

Eine bevorzugte Ausführungsform (5), welche eine der Ausführungsformen (1) bis (6) konkretisiert, betrifft die elastische Membran, wobei die Wasserdichtigkeit (LEP) größer als 2 bar beträgt und bevorzugt im Bereich von 2 bis 5 bar, weiter bevorzugt im Bereich von 3 bis 4 bar, liegt, bestimmt nach DIN EN 20811.

Eine bevorzugte Ausführungsform (6), welche eine der Ausführungsformen (1) bis (5) konkretisiert, betrifft die elastische Membran, wobei die Porengrößenverteilung einen Gradienten über den Durchmesser der Membran aufweist.

Eine bevorzugte Ausführungsform (7), welche eine der Ausführungsformen (1) bis (6) konkretisiert, betrifft die elastische Membran, wobei das Elastomer ein thermoplastisches Elastomer (P1) umfasst.

Eine bevorzugte Ausführungsform (8), welche eine der Ausführungsformen (1) bis (7) konkretisiert, betrifft die tlastische Membran, wobei das thermoplastische Elastomer (P1) ein Polyurethan-Elastomer basierend auf den folgenden Komponenten umfasst:
- 15 bis 75 Gewichts-% einer Mischung aus mindestens einem Diol (D1) und mindestens einem Isocyanat (11),
- 25 bis 85 Gewichts-% mindestens einer Verbindung (C1) aufweisend mindestens zwei gegenüber Isocyanat reaktiven Gruppen, welche ein Polyol ist.

Eine bevorzugte Ausführungsform (9), welche eine der Ausführungsformen (1) bis (8) konkretisiert, betrifft die elastische Membran, wobei das thermoplastische Elastomer (P1) ein Polyurethan-Elastomer basierend auf den folgenden Komponenten umfasst
- 20 bis 75 Gewichts-% einer Mischung aus mindestens einem Diol (D1) und mindestens einem Isocyanat (11),
- 25 bis 80 Gewichts-% mindestens einer Verbindung (C1) aufweisend mindestens zwei gegenüber Isocyanat reaktiven Gruppen, welche ein Polyol ist.

Eine bevorzugte Ausführungsform (10), welche eine der Ausführungsformen (1) bis (9) konkretisiert, betrifft die elastische Membran, wobei das thermoplastische Elastomer (P1) ein Polyurethan-Elastomer basierend auf den folgenden Komponenten umfasst:
- 55 bis 70 Gewichts-% einer Mischung aus mindestens einem Diol (D1) und mindestens einem Isocyanat (11),
- 30 bis 45 Gewichts-% mindestens einer Verbindung (C1) aufweisend mindestens zwei gegenüber Isocyanat reaktiven Gruppen, welche ein Polyol ist.

Eine bevorzugte Ausführungsform (11), welche eine der Ausführungsformen (1) bis (10) konkretisiert, betrifft die elastische Membran, wobei das mindestens eine Diol (D1) ausgewählt ist aus der Gruppe bestehend aus Ethandiol, Butandiol und Hexandiol, bevorzugt mindestens 1,4-Butandiol umfasst.

Eine bevorzugte Ausführungsform (12), welche eine der Ausführungsformen (1) bis (11) konkretisiert, betrifft die elastische Membran, wobei das mindestens eine Isocyanat (11) ein Polyisocyanat ist, ausgewählt ist aus der Gruppe bestehend aus Diphenylmethandiisocyanat (MDI), Toluoldiisocyanat (TDI), Hexamethylendiisocyanat (HDI) und Dicyclohexylmethan-4,4'-diisocyanat (H12MDI), bevorzugt MDI.

Eine bevorzugte Ausführungsform (13), welche eine der Ausführungsformen (1) bis (11) konkretisiert, betrifft die elastische Membran, wobei die mindestens eine Verbindung (C1) aufweisend mindestens zwei gegenüber Isocyanat reaktiven Gruppen pTHF ist.

Eine Ausführungsform (14) betrifft ein elastisches Gewebe umfassend ein Gewebe und mindestens eine auflaminierte elastische Membran gemäß einer der Ausführungsformen (1) bis (13), aufweisend eine Gesamt-Reißdehnung größer 150% gemessen nach DIN 53504.

Eine Ausführungsform (15) betrifft die Verwendung einer elastischen Membran gemäß einer der Ausführungsformen (1) bis (13) zur Beschichtung von Gewebe, bevorzugt zur Herstellung eines Artikels ausgewählt aus der Gruppe bestehend aus Bekleidung, Schuh, Stiefel, Schutzanzug, Zelt, Plane, Rucksack und Schirm.

### Angeführte Literatur

US 3,953,566
US 3,962,153
US 5,562,977
US 2015/0230563
Kunststoffhandbuch, 7, "Polyurethane", Carl Hanser Verlag, 1993, Sektion 3.1
"Kunststoffhandbuch"; 7, "Polyurethane", Carl Hanser Verlag, 1966, Seiten 103-113
GB 1 210 691 A
CN 1 554 705 A

Die nachfolgenden Beispiele dienen der Veranschaulichung der Erfindung, sind aber nicht beschränkend im Hinblick auf den Gegenstand der Erfindung.

### Beispiele

### 1. Chemikalien und Rezepturen

**Tabelle 1: Chemikalien**

| Abkürzung | Bezeichnung | Chemische Zusammensetzung |
|---|---|---|
| Iso1 | Isocyanat | 4,4'-Methylendiphenylendiisocyanat |
| Polyol1 | Polyol | Polytetrahydrofuran, zahlenmittlere Molmasse Mn = 1000 g/mol, OH-Zahl: 111,1 |
| KV1 | Kettenverlängerer, Diol | 1,4-Butandiol |
| AO1 | Antioxidans | sterisch gehindertes Phenol |
| LS1 | Lichtschutzmittel 1 | N-(2-Ethoxyphenyl)-N'-(2-ethylphenyl)oxamid |
| LS2 | Lichtschutzmittel 2 | Butandisäuredimethylester, Polymer mit 4-Hydroxy-2,2,6,6-tetramethyl-1- piperidinethanol |
| GL1 | Wachs Verarbeitungshilfsmittel | (N,N'-Ethylendi(stearamid) |
| NMP | | N-Methylpyrrolidon |
| GLY | | Glycerin |

**Tabelle 2: TPU-Rezepturen**

| | TPU 1 | TPU 2 | TPU 3 | TPU Vergleich 1 |
|---|---|---|---|---|
| Name | Menge [g] | Menge [g] | Menge [g] | Menge [g] |
| Polyol1 | 4133 | 3714 | 3098 | -- |
| Iso1 | 4547 | 4828 | 5143 | 7365 |
| KV1 | 1265 | 1403 | 1569 | 2655 |
| AO1 | 50 | 50 | 50 | -- |
| GL1 | 5 | 5 | -- | -- |
| LS1 | -- | -- | 60 | -- |
| LS2 | -- | -- | 60 | -- |

### 2. Testmethoden

Der Flüssigkeitseintrittsdruck (LEP) der Membranen wurde gemäß DIN EN 20811 unter Verwendung einer Druckzelle mit einem Durchmesser von 60 mm mit ultrareinem Wasser (salzfreies Wasser, gefiltert durch ein Millipore UF-System) bis zu 4,0 bar (40 000 mm Wassersäule) bestimmt. Der Flüssigkeitseintrittsdruck LEP ist definiert als der Druck, bei welchem das flüssige Wasser beginnt, die Membran zu permeieren. Ein hoher LEP erlaubt es der Membran, einer hohen Wassersäule (flüssig) standzuhalten.

Die Wasserdampfpermeabilitäten ( water vapour permeability, WDD) wurde mit einem Cup-Verfahren bei 38 °C und 90 % relativer Feuchtigkeit gemäß DIN 53122 bestimmt. Für eine bestimmte Membrandicke wurden absolute WDD-Werte bestimmt. Hohe WDD-Werte waren erwünscht und erlaubten hohe Flussraten des Wasserdampfes.

Zugversuche für E-Modul und Reißdehnung wurden gemäß DIN 53455/ISO 527 durchgeführt.

### 3. Herstellung der Polymere im Handgussverfahren

Die einzelnen Komponenten wurden gemäß Tabelle 2 eingesetzt. Die Polyole und Kettenverlängerer wurden bei 80 °C in einem Behälter vorgelegt und mit den Komponenten gemäß der oben genannten Rezepturen bei einer Ansatzgröße von 2 kg unter starkem Rühren vermischt. Die Reaktionsmischung erhitzte sich auf über 110 °C und wurde dann auf einen auf ca. 110 °C aufgeheizten, teflonbeschichteten Tisch ausgegossen. Die erhaltene Gießschwarte wurde 15 Stunden bei 80 °C getempert. Das so hergestellte Material wurde in einer Mühle zu einem schüttfähigen Granulat zerkleinert, erneut getrocknet und in Aluminium beschichtete PE-Beutel zur weiteren Verwendung gefüllt.

Die Extrusion erfolgte auf einem Doppelschneckenextruder der einen Strangdurchmesser von ca. 2 mm lieferte.

| Extruder: | gleichläufiger Doppelschneckenextruder, APV MP19 |
|---|---|
| Temperaturprofil: | HZ1 170 °C bis 220 °C |
| | HZ2 180 °C bis 230 °C |
| | HZ3 190 °C bis 230 °C |
| | HZ4 210 °C bis 240 °C |
| | HZ5 (Düse) 200 °C bis 240 °C |
| Schneckendrehzahl: | 100 U/min |
| Druck: | ca. 10 bis 30 bar |
| Strangkühlung: | Wasserbad (10 °C) |

Das Temperaturprofil wurde abhängig von der Erweichungstemperatur des Polymeren gewählt.

### 4. Herstellung poröser Membranen mit N-Methylpyrrolidon als Polymer-Lösungsmittel

In einem Dreihalskolben mit einem Magnetrührer wurden 71 ml N-Methylpyrrolidon 1, 10 g Glycerin als zweites Additiv und 19 g TPU-Polymer gemäß 3., jeweils für die TPUs 1, 2 und 3 sowie für das Vergleichsbeispiel 1, zusammengegeben. Die Mischung wurde unter leichtem Rühren auf 60°C erwärmt, bis seine homogene klare viskose Lösung vorlag. Die Lösung wurde über Nacht bei Raumtemperatur entgast. Es wurden klare und transparente Polymerlösungen erhalten.

Anschließend wurde die Polymerlösung wieder für 2h auf 60°C erwärmt und dann auf einer Glasplatte mit einem Gußmesser (150 microns) bei 60°C verteilt, unter Verwendung einer Erichsen Beschichtungsmaschine bei einer Geschwindigkeit von 0,2 m/min. Der Membranfilm wurde für 30 Sekunden ruhen gelassen, anschließend folgte Immersion in einem Wasserbad bei 25°C für 10 Minuten. Nach Ablösung der Membran von der Glasplatte wurde die Membran für 12 Stunden in ein Wasserbad überführt. Nach mehreren Waschschritten mit Wasser wurde die Membran bis zur Charakterisierung bzgl. LEP und WDD feucht gelagert. A Als Vergleich 2 wurde eine kommerziell verfügbare, poröse PTFE Folie mit einer Dicke von 25µm) ohne Stützgewebe eingesetzt. Tabelle 3 fasst die Membraneigenschaften zusammen.

**Tabelle 3: Zusammensetzungen und Eigenschaften der erzeugten Membranen; Dicke in [µm], LEP in [bar], WDD_{abs.} in [g/m²*d], E-Modul [MPa], Reißdehnung [%].**

| | TPU | E-modul | Reißdehnung | Dicke | LEP | WDD_{abs.} |
|---|---|---|---|---|---|---|
| Beispiel 1 | 1 | 86 | 234 | 45 | 3 | 1312 |
| Beispiel 2 | 2 | 118 | 200 | 50 | 3 | 1469 |
| Beispiel 3 | 3 | 132 | 151 | 43 | 3 | 1245 |
| Vergleichsbeispiel 1 | Vergleich 1 | 274 | 21 | 50 | 3 | 1224 |
| Vergleichsbeispiel 2 | PTFE | 57 | 64 | 40 | 4 | 2120 |

Die erhaltenen porösen Membranen wiesen verbesserte mechanische Eigenschaften wie beispielsweise einen erhöhten E-Modul und eine erhöhte Reißdehnung auf. Gleichzeitig wiesen sie vergleichbare Charakteristika hinsichtlich WDD und LEP wie Membranen des Standes der Technik auf.

### 5. Porengrößenverteilung

Die Porengrößenverteilung der Membranen gemäß Sektion 4. wurde für Beispiel 1 mit Hg- Porosimetrie nach DIN 66133 bestimmt, die Ergebnisse sind in Tabelle 4 zusammengefasst:

**Tabelle 4: Porengrößenverteilung der Membranen gemäß Beispiel 1 aus Sektion 4**

| Porendurchmesser (µm) | Inkrementelle Porenfläche (m²/g) |
|---|---|
| 0,500 | 0,152 |
| 0,100 | 27,766 |
| 0,050 | 0,604 |
| 0,010 | 0,899 |
| 0,004 | 7,427 |

Der mittlere Porendurchmesser betrug 0,23307 µm und der mittlere Porendurchmesser (Fläche) bei 1018,74 psi und 19,968 m²/g betrug 0,21158 µm.

Die Membranen aus Sektion 4. wurden ebenfalls mit Rasterelektronenmikroskopie (SEM) untersucht. Beide Oberflächen (unten und oben) der Membranen sowie die Querschnittsfläche wurden untersucht. Die Messungen ergaben, dass die Membranen einen Porengrößegradienten mit kleinen Poren in der obersten Schicht (Haut) und größeren Poren hin zum Boden der Membranen aufwiesen.

## Patentansprüche

1. Elastische Membran umfassend ein Elastomer mit einer Reißdehnung größer 150% gemessen nach DIN 53504; wobei das Elastomer ein thermoplastisches Elastomer (P1) umfasst, wobei das thermoplastische Elastomer (P1) ein Polyurethan-Elastomer basierend auf den folgenden Komponenten umfasst:
- 11 bis 79 Gewichts-% einer Mischung aus mindestens einem Diol (D1) und mindestens einem Isocyanat (11),
- 21 bis 89 Gewichts-% mindestens einer Verbindung (C1) aufweisend mindestens zwei gegenüber Isocyanat reaktiven Gruppen, welche ein Polyol ist,
charakterisiert dadurch, dass
die elastische Membran Poren mit einem mittleren Porendurchmesser kleiner als 2000 nm, bestimmt mittels Hg-Porosimetrie gemäß DIN 66133, aufweist.

2. Elastische Membran nach Anspruch 1, wobei die relative Wasserdampfdurchlässigkeit (WDD_{rel.}) bei 38 °C und 90 % relativer Luftfeuchtigkeit entsprechend DIN 53122 größer als 50 [g*mm/m²*d] und die absolute Wasserdampfdurchlässigkeit (WDD_{abs}.) bei 38 °C und 90 % relativer Luftfeuchtigkeit entsprechend DIN 53122 größer als 1000 [g/m²*d] beträgt.

3. Elastische Membranen nach Anspruch 1 oder 2, wobei die Wasserdichtigkeit (LEP) größer als 2 bar beträgt und bevorzugt im Bereich von 2 bis 5 bar, weiter bevorzugt im Bereich von 3 bis 4 bar, liegt, bestimmt nach DIN EN 20811.

4. Elastische Membran nach einem der Ansprüche 1 bis 3, wobei das mindestens eine Diol (D1) ausgewählt ist aus der Gruppe bestehend aus Ethandiol, Butandiol und Hexandiol, bevorzugt mindestens 1,4-Butandiol umfasst.

5. Elastische Membran nach einem der Ansprüche 1 bis 4, wobei das mindestens eine Isocyanat (11) ein Polyisocyanat ist, ausgewählt ist aus der Gruppe bestehend aus Diphenylmethandiisocyanat (MDI), Toluoldiisocyanat (TDI), Hexamethylendiisocyanat (HDI) und Dicyclohexylmethan-4,4'-diisocyanat (H12MDI), bevorzugt MDI.

6. Elastische Membran nach einem der Ansprüche 1 bis 5, wobei die mindestens eine Verbindung (C1) aufweisend mindestens zwei gegenüber Isocyanat reaktiven Gruppen Polytetrahydrofuran (pTHF) ist.

7. Elastisches Gewebe umfassend ein Gewebe und mindestens eine auflaminierte elastische Membran gemäß einem der Ansprüche 1 bis 6 aufweisend eine Gesamt-Reißdehnung größer 150% gemessen nach DIN 53504.

8. Verwendung einer elastischen Membran gemäß einem der Ansprüche 1 bis 6 zur Beschichtung von Gewebe, bevorzugt zur Herstellung eines Artikels ausgewählt aus der Gruppe bestehend aus Bekleidung, Schuh, Stiefel, Schutzanzug, Zelt, Plane, Rucksack und Schirm.

## Claims

1. An elastic membrane comprising an elastomer having an elongation at break of greater than 150% measured according to DIN 53504; where the elastomer comprises a thermoplastic elastomer (P1), where the thermoplastic elastomer (P1) comprises a polyurethane elastomer based on the following components:
- 11% to 79% by weight of a mixture of at least one diol (D1) and at least one isocyanate (11),
- 21% to 89% by weight of at least one compound (C1) having at least two isocyanate-reactive groups, which compound is a polyol,
wherein
the elastic membrane has pores having an average pore diameter of less than 2000 nm, determined by means of Hg porosimetry in accordance with DIN 66133.

2. The elastic membrane according to claim 1, wherein the relative water vapor permeability (WVP_{rel.}) at 38°C and 90% relative humidity in accordance with DIN 53122 is greater than 50 [g*mm/m²*d] and the absolute water vapor permeability (WVP_{abs.}) at 38°C and 90% relative humidity in accordance with DIN 53122 is greater than 1000 [g/m²*d].

3. The elastic membrane according to claim 1 or 2, wherein the watertightness (LEP) is greater than 2 bar and preferably is in the range from 2 to 5 bar, more preferably in the range from 3 to 4 bar, determined according to DIN EN 20811.

4. The elastic membrane according to any of claims 1 to 3, wherein the at least one diol (D1) is selected from the group consisting of ethanediol, butanediol and hexanediol, preferably comprises at least butane-1,4-diol.

5. The elastic membrane according to any of claims 1 to 4, wherein the at least one isocyanate (11) is a polyisocyanate, selected from the group consisting of diphenylmethane diisocyanate (MDI), toluene diisocyanate (TDI), hexamethylene diisocyanate (HDI) and dicyclohexylmethane 4,4'-diisocyanate (H12MDI), preferably MDI.

6. The elastic membrane according to any of claims 1 to 5, wherein the at least one compound (C1) having at least two isocyanate-reactive groups is polytetrahydrofuran (pTHF).

7. An elastic fabric comprising a fabric and at least one laminated-on elastic membrane according to any of claims 1 to 6, having an overall elongation at break of greater than 150% measured according to DIN 53504.

8. The use of an elastic membrane according to any of claims 1 to 6 for the coating of fabric, preferably for the production of an article selected from the group consisting of clothing, shoes, boots, protective clothing, tents, tarpaulins, backpacks and umbrellas .

## Revendications

1. Membrane élastique comprenant un élastomère présentant un allongement à la déchirure supérieur à 150%, mesuré selon la norme DIN 53504 ; l'élastomère comprenant un élastomère thermoplastique (P1), l'élastomère thermoplastique (P1) comprenant un élastomère de polyuréthane à base des composants suivants :
- 11 à 79% en poids d'un mélange d'au moins un diol (D1) et d'au moins un isocyanate (I1),
- 21 à 89% en poids d'au moins un composé (C1) présentant au moins deux groupes réactifs vis-à-vis d'isocyanate, qui est un polyol.
**caractérisée en ce que**
la membrane élastique présente des pores présentant un diamètre moyen de pore inférieur à 2000 nm, déterminé par porosimétrie par intrusion de Hg selon la norme DIN 66133.

2. Membrane élastique selon la revendication 1, la perméabilité relative à la vapeur d'eau (WDDᵣₑₗ) à 38°C et à une humidité relative de l'air de 90% selon la norme DIN 53122 étant supérieure à 50 [g*mm/m²*j] et la perméabilité absolue à la vapeur d'eau (WDD_{abs}) à 38°C et à une humidité relative de l'air de 90% selon la norme DIN 53122 étant supérieure à 1000 [g/m²*j].

3. Membranes élastiques selon la revendication 1 ou 2, l'étanchéité à l'eau (LEP - liquid entry pressure - pression d'entrée de liquide) étant supérieure à 2 bars et de préférence située dans la plage de 2 à 5 bars, plus préférablement dans la plage de 3 à 4 bars, déterminée selon la norme DIN EN 20811.

4. Membrane élastique selon l'une des revendications 1 à 3, ledit au moins un diol (D1) étant choisi dans le groupe constitué par l'éthanediol, le butanediol et l'hexanediol et comprenant de préférence au moins du 1,4-butanediol.

5. Membrane élastique selon l'une des revendications 1 à 4, ledit au moins un isocyanate (II) étant un polyisocyanate, choisi dans le groupe constitué par le diisocyanate de diphénylméthane (MDI), le diisocyanate de toluène (TDI), le diisocyanate d'hexaméthylène (HDI) et le 4,4'-diisocyanate de dicyclohexylméthane (H12MDI), de préférence le MDI.

6. Membrane élastique selon l'une des revendications 1 à 5, ledit au moins un composé (C1) présentant au moins deux groupes réactifs vis-à-vis d'isocyanate étant le polytétrahydrofuranne (pTHF).

7. Tissu élastique comprenant un tissu et au moins une membrane élastique stratifiée sur celui-ci, selon l'une des revendications 1 à 6 présentant un allongement total à la déchirure supérieur à 150%, mesuré selon la norme DIN 53504.

8. Utilisation d'une membrane élastique selon l'une des revendications 1 à 6 pour le revêtement d'un tissu, de préférence pour la fabrication d'un article choisi dans le groupe constitué par un revêtement, une chaussure, une botte, un vêtement de protection, une tente, une bâche, un sac à dos et un parapluie.
